Europäisches Patentamt

European Patent Office

Office européen des brevets

(19)

(11) Veröffentlichungsnummer: **0 357 979**

**A1**

(12) **EUROPÄISCHE PATENTANMELDUNG**

(21) Anmeldenummer: **89114643.3**

(22) Anmeldetag: **08.08.89**

(51) Int. Cl.5: **B60N 2/06**

(30) Priorität: **02.09.88 DE 3829811**

(43) Veröffentlichungstag der Anmeldung:
**14.03.90 Patentblatt 90/11**

(84) Benannte Vertragsstaaten:
**BE DE ES FR GB NL SE**

(71) Anmelder: **VEREINIGTE ALUMINIUM-WERKE
AKTIENGESELLSCHAFT**
**Berlin - Bonn Postfach 2468**
**Georg-von-Boeselager-Strasse 25**
**D-5300 Bonn 1(DE)**

(72) Erfinder: **Griep, Winfried**
**Kirchfeldstrasse 1**
**D-5300 Bonn 1(DE)**
Erfinder: **Bergheim, Hans**
**Am Wichelshof 34**
**D-5300 Bonn 1(DE)**

(74) Vertreter: **Müller-Wolff, Thomas, Dipl.-Ing.**
**Vereinigte Aluminium-Werke AG**
**Georg-von-Boeselager-Strasse 25 Postfach
2468**
**D-5300 Bonn 1(DE)**

(54) **Längsführung insbesondere für Längsverstellvorrichtungen von Fahrzeugsitzen.**

(57) In den sich diagonal gegenüberliegenden Eckpunkten der umgreifenden Schiene (1) sind recht-eckförmige Gleitkörper (2,3) angeordnet, die in der umgriffenen Schiene (4) exzentrisch gelagert sind, wobei mindestens einer der Gleitkörper (2,3) auf einer Achse (7,8) drehbar gelagert ist. An der umgrif-fenen Schiene (4) sind Stützarme (5,6) mit einer Nut oder Bohrung zur Aufnahme von an den Gleitkör-pern (2,3) angebrachten Befestigungselementen an-geordnet.

Figur 1

# Längsführung insbesondere für Längsverstellvorrichtungen von Fahrzeugsitzen

Die Erfindung betrifft eine Längsführung insbesondere für Längsverstellvorrichtungen von Fahrzeugsitzen und vorzugsweise für motorgetriebene Längsverstellvorrichtungen mit zwei länglichen gegeneinander verschiebbaren und ineinander geführten Schienen, von denen eine als umgriffene, die andere als umgreifende Schiene ausgebildet ist, die einen im wesentlichen rechteckförmigen Innenraum umschließen.

Eine Längsführung der eingangs genannten Art ist aus der DE-OS 33 21 869 bekannt. Die ineinander geführten Schienen stehen dabei über zwei Reihen von Wälzkörpern insbesondere Kugeln miteinander in Verbindung. Bei der Fertigung der Strangpreßprofile müssen enge Toleranzen eingehalten werden, damit die Sitzschienen auch bei hoher Belastung einwandfrei gegeneinander verschiebbar sind. Bei der Verwendung von Stahlkugeln sind zusätzliche Maßnahmen zur Schmierung erforderlich.

Aufgabe der vorliegenden Erfindung ist es, eine Längsführung insbesondere für Längsverstellvorrichtungen von Fahrzeugsitzen derart auszubilden, daß die bei der Fertigung und evtl. auch durch spätere Abnutzung auftretenden Toleranzen ausgeglichen werden können. Ferner sollen die mit der Schmierung von Wälzkörpern verbundenen Probleme vermieden werden.

Die Aufgabe wird erfindungsgemäß durch die in den Patentansprüchen angegebenen Merkmale gelöst. Es hat sich gezeigt, daß durch die Verwendung von im wesentlichen rechteckförmigen Gleitkörpern, die an der umgriffenen Schiene exzentrisch gelagert sind, alle auftretenden Toleranzen in einem weiten Bereich ausgeglichen werden können. Dadurch kann die Fertigung vereinfacht werden, denn es entfallen die engen Passungen und zusätzliche Richtarbeiten wie sie üblicherweise erforderlich sind.

Im folgenden wird die Erfindung anhand eines Ausführungsbeispieles näher erläutert.
Die umgreifende Schiene 1 weist einen im wesentlichen G-förmigen Querschnitt auf, in dessen offenes Ende eine im wesentlichen rechtwinklige umgriffene Schiene 4 angeordnet ist. An den Endpunkten der umgriffenen Schiene 4 sind Stützarme 5, 6 ausgebildet, die zu den in diagonaler Richtung gegenüberliegenden Eckpunkten der umgreifenden Schiene 1 weisen. Am Ende der Stützarme 5, 6 befindet sich eine Nut zur Aufnahme einer Achse 7, 8, die mit den Gleitkörpern 2, 3 in Verbindung steht. Die Achsen 7, 8 sind in bezug auf den Mittelpunkt der Gleitkörper 2, 3 exzentrisch angebracht und lassen sich in den Stützarmen 5, 6 drehen. Wegen der exzentrischen Lagerung ist es erforderlich, daß der Lagerpunkt der Stützschiene 5, 6 in genügendem Abstand von der umgriffenen Schiene 4 liegt.

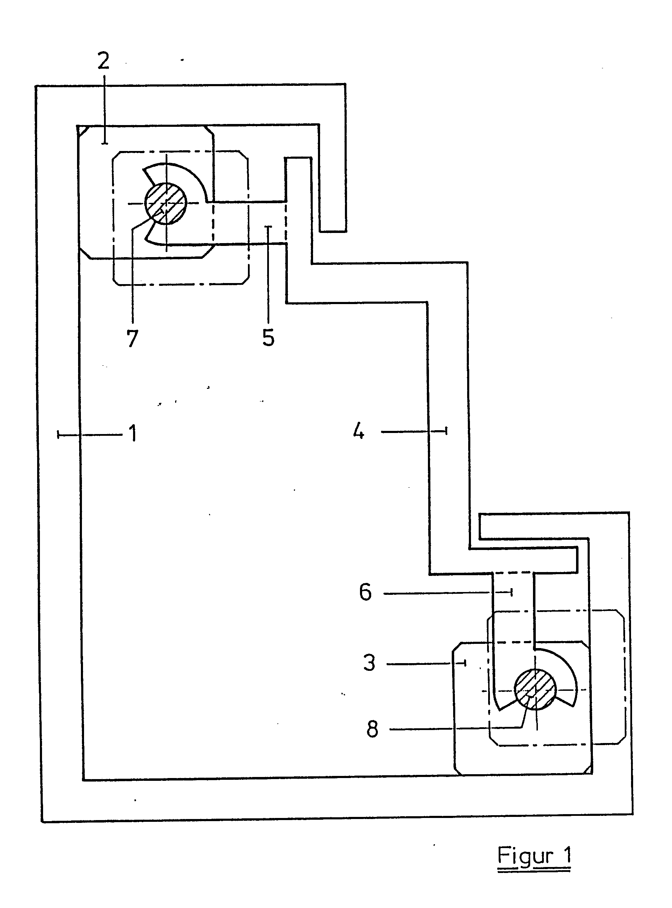

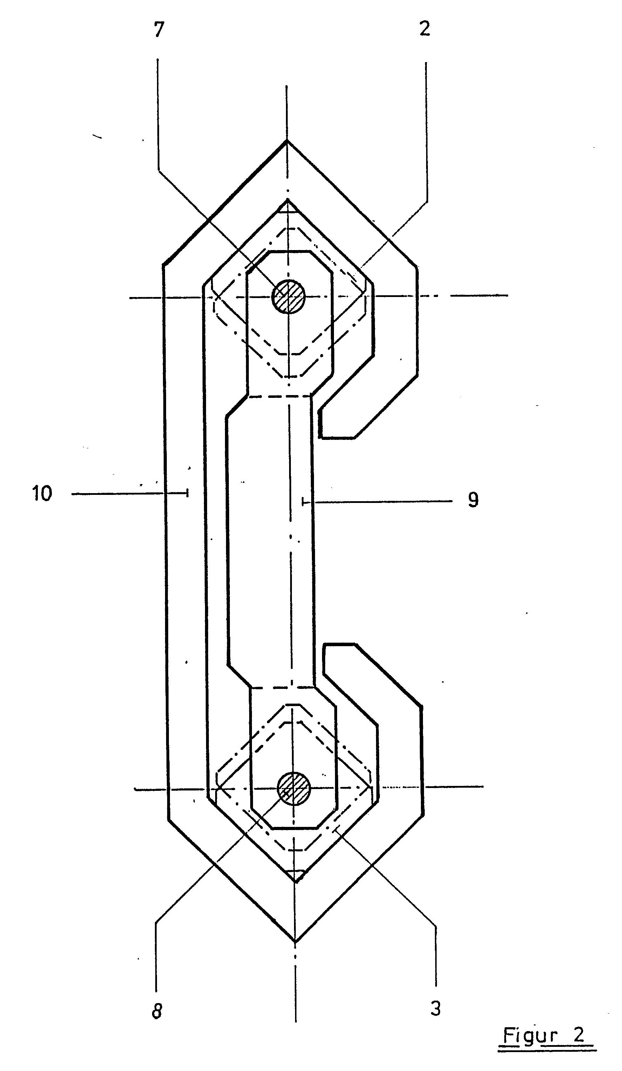

## Ansprüche

1. Längsführung für Sitze, Kopfstützen, Lenksäulen o. dgl. insbesondere für Längsverstellvorrichtungen von Fahrzeugsitzen und vorzugsweise für motorgetriebene Längsverstellvorrichtungen mit zwei länglichen gegeneinander verschiebbaren und ineinander geführten Schienen, von denen eine als umgriffene, die andere als umgreifende Schiene ausgebildet ist, die einen im wesentlichen rechteckförmigen Innenraum umschließen, dadurch gekennzeichnet, daß in den sich diagonal gegenüberliegenden Eckpunkten der umgreifenden Schiene (1) rechteckförmige Gleitkörper (2, 3) angeordnet sind, die in der umgriffenen Schiene (4) exzentrisch gelagert sind.

2. Längsführung nach Anspruch 1, dadurch gekennzeichnet, daß an der umgriffenen Schiene (4) Stützarme (5, 6) mit einer Nut, Bohrung o.dgl. zur Aufnahme von in Längsrichtung der Schiene seitlich an den Gleitkörpern (2, 3) angebrachten Befestigungselementen angeordnet sind.

3. Längsführung nach einem der vorhergehenden Ansprüche, dadurch gekennzeichnet, daß mindestens einer der Gleitkörper (2, 3) auf einer Achse (7, 8) drehbar gelagert sind.

4. Längsführung nach einem der vorhergehenden Ansprüche, dadurch gekennzeichnet, daß die umgreifende Schiene (1) im Querschnitt G-förmige ausgebildet ist, wobei die Gleitkörper (2, 3) im linken oberen Eckpunkt bzw. im diagonal gegenüberliegenden rechten unteren Eckpunkt angeordnet sind.

5. Längsführung nach einem der vorhergehenden Ansprüche, dadurch gekennzeichnet, daß die umgriffene Schiene (4) aus einem mindestens einen rechten Winkel bildenden Winkelprofil besteht, der die offene Flanke der G-förmigen, umgreifenden Schiene (1) abdeckt.

6. Längsführung nach einem der vorhergehenden Ansprüche, dadurch gekennzeichnet, daß die umgreifende Schiene (1) und die umgriffene Schiene (4) als Strangpreßprofil ausgebildet sind, wobei die umgriffene Schiene (4) mit ausgeklinkten Stützarmen (5, 6) zur Aufnahme der Gleitstücke (2, 3) versehen ist.

7. Längsführung nach einem der vorhergehenden Ansprüche, dadurch gekennzeichnet, daß die Gleitkörper (2, 3) aus Kunststoff bestehen.

8. Längsführung nach einem der vorhergehenden Ansprüche, dadurch gekennzeichnet, daß die umgreifende und umgriffene Schiene aus einer Aluminiumstrangpreßlegierung bestehen.

9. Längsführung nach einem der vorhergehenden Ansprüche, dadurch gekennzeichnet, daß die umgriffene Schiene ( ) aus einem Flachprofil besteht, das die offene Flanke der C-förmigen umgreifenden Schiene ( ) abdeckt.

10. Längsführung nach einem der vorhergehenden Ansprüche, dadurch gekennzeichnet, daß mindestens zwei Gleitkörper (2 bzw. 3) hintereinander deckungsgleich auf einer Achse (7 bzw. 8) befestigt ist, wobei die Lage aller Gleitkröper (2 bzw. 3) verdrehsicher durch Drehung der Achsen (7 bzw. 8) einstellbar ist.

Figur 1

Figur 2

Europäisches
Patentamt

**EUROPÄISCHER RECHERCHENBERICHT**

Nummer der Anmeldung

EP 89 11 4643

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 090 235 (KRONENBERG) <br> * Seite 11, Zeilen 10-19; Figur 13 * <br> --- | 1,3,7 | B 60 N 2/06 |
| A | FR-A-2 547 779 (LIFEL) <br> * Seite 3, Zeile 1 - Seite 4, Zeile 21; Figuren * <br> --- | 1,7,9 | |
| A | GB-A-2 108 380 (HAMMERSTEIN) <br> * Seite 2, Zeilen 33-89; Figur * <br> ----- | 1,4,5 | |

RECHERCHIERTE
SACHGEBIETE (Int. Cl.5)

B 60 N
F 16 C

Der vorliegende Recherchenbericht wurde für alle Patentansprüche erstellt

| Recherchenort | Abschlußdatum der Recherche | Prüfer |
|---|---|---|
| DEN HAAG | 06-11-1989 | HORVATH R.C. |

EPO FORM 1503 03.82 (P0403)